# EUROPEAN PATENT APPLICATION

(11) **EP 4 502 098 A1**
(43) Date of publication of application: **05.02.2025**
(21) Application number: 23780730.0
(22) Date of filing: 29.03.2023
(51) Int. Cl.: C09J 11/04, C09J 11/06, C09J 171/02, C09J 201/10, H01M 10/54, H01M 10/613, H01M 10/647, H01M 10/6554, H01M 10/6555, H01M 50/289, H01M 50/293

(54) **CURABLE ADHESIVE COMPOSITION FOR BATTERY, BATTERY MODULE, AND BATTERY PACK**

(30) Priority: 31.03.2022 JP 2022059850
(71) Applicant: Sekisui Polymatech Co., Ltd., Saitama-city, Saitama 338-0837 (JP); Sekisui Fuller Company, Ltd., Tokyo 108-0075 (JP)
(72) Inventor: KATORI, Masaya, Saitama-city, Saitama 338-0837 (JP); OZAWA, Motoki, Saitama-city, Saitama 338-0837 (JP); SATO, Daichi, Saitama-city, Saitama 338-0837 (JP); IKEUCHI, Takuto, Koka-shi, Shiga 528-0056 (JP); IINO, Tatsuya, Koka-shi, Shiga 528-0056 (JP)
(74) Representative: Ter Meer Steinmeister & Partner
(86) International application number: PCT/JP2023/012887
(87) International publication number: WO 2023/190722

(57) **Abstract**

The curable adhesive composition for a battery of the present invention is a curable adhesive composition for a battery comprising a hydrolyzable silyl group-containing organic polymer and a thermally conductive filler, wherein a cured product of the curable adhesive composition for a battery has a Shore A hardness of 90 or less and a shear strength of 0.5 to 5 MPa. The present invention is capable of providing a curable adhesive composition for a battery, the composition having good reworkability while having suitable adhesion.

## Description

### Technical Field

The present invention relates to a curable adhesive composition for a battery, a battery module, and a battery pack.

### Background Art

In recent years, due to global concerns about environmental issues, emphasis has been placed on that various products should have structures that can be readily recycled or repaired. In the field of automobiles as well, conversion from conventional gasoline vehicles to electric vehicles is in progress, thus development of lithium-ion batteries (LiB) for use in electric vehicles is accelerated and, accordingly, there is also a strong demand for lithium-ion batteries having a structure that can be readily recycled or repaired.

From the viewpoint of heat dissipation properties, lithium-ion batteries are often provided with a thermally conductive adhesive between various components such as a battery cell, a battery module, and a battery pack in order to secure such components and enhance heat dissipation properties.

For example, PTL 1 discloses an invention concerning a battery pack with improved safety attained by effectively controlling heat generation or thermal runaway, and discloses the use of a heat conductive epoxy adhesive, a heat conductive silicone adhesive, and the like.

PTL 2 discloses, as a material for use in a battery pack, a thermally conductive material containing a resin such as a polysiloxane resin (a silicone resin), a polyamide resin, a urethane resin or an epoxy resin, and a filler such as aluminum or copper.

### Citation List

### Patent Literature

PTL 1: JP 2020-509543 A
PTL 2: JP 2020-537312 A

### Summary of Invention

### Technical Problem

From the viewpoint of recycling lithium-ion batteries, for example, when components (e.g., battery modules) are bonded to each other with an adhesive, the components need to be easily separated from each other.

However, in the case of adhesives made of epoxy resin, urethane resin, or the like as disclosed in the background art documents, it is difficult to easily separate the components due to strong adhesion, the components even when separated become deformed, and thus there is the problem that the components cannot be recycled or repaired. Moreover, in recent years, the components are produced in the form of a thin film, and the defects during separation are more noticeable.

Also, many adhesives made of silicone resin have poor adhesion and do not provide practical adhesion to polyethylene terephthalate resin, polybutylene terephthalate resin, and polycarbonate resin used in battery modules. When adhesion is poor, the components need to be secured with another component or need to be secured with a screw or a fitting structure, thus inhibiting size reduction.

Although some adhesives containing silicone resin have improved adhesion to aluminum, an attempt to peel the components off may result in cohesive failure. When cohesive failure occurs, an adhesive remains on the surfaces of the separated components (adherents), and thus the components have to be cleaned, thus inhibiting recycling and the like.

As described above, there is the problem of poor reworkability that, for example, the components become deformed or an adhesive remains on the surfaces of the components when separating the components used in a battery. There is also the problem that the adhesive that secures the components does not have necessary adhesion.

Accordingly, an object of the present invention is to provide a curable adhesive composition for a battery, the composition having good reworkability while having suitable adhesion.

### Solution to Problem

As a result of having conducted diligent research, the inventors found that a curable adhesive composition for a battery, comprising an hydrolyzable silyl group-containing organic polymer and a thermally conductive filler, and having a Shore A hardness and a shear strength within specific ranges after being cured, can solve the above problems, and accomplished the present invention.

The present invention provides [1] to [13] below.

[1] A curable adhesive composition for a battery, comprising a hydrolyzable silyl group-containing organic polymer and a thermally conductive filler, wherein a cured product of the curable adhesive composition for a battery has a Shore A hardness of 90 or less and a shear strength of 0.5 to 5 MPa.
[2] A curable adhesive composition for a battery, which is used by mixing a first agent comprising a hydrolyzable silyl group-containing organic polymer and a thermally conductive filler, and a second agent comprising a silanol condensation catalyst, wherein
   the curable adhesive composition for a battery after being cured has a Shore A hardness of 90 or less and a shear strength of 0.5 to 5 MPa.
[3] A curable adhesive composition for a battery, comprising a first agent comprising a hydrolyzable silyl group-containing organic polymer and a thermally conductive filler and filled in a first container, and a second agent comprising a silanol condensation catalyst and filled in a second container, wherein
   a cured product of the curable adhesive composition for a battery has a Shore A hardness of 90 or less and a shear strength of 0.5 to 5 MPa.
[4] The curable adhesive composition for a battery according to any one of [1] to [3], wherein the hydrolyzable silyl group-containing organic polymer is hydrolyzable silyl group-containing polyalkylene oxide.
[5] The curable adhesive composition for a battery according to any one of [1] to [4], wherein the hydrolyzable silyl group-containing organic polymer has a number-average molecular weight (Mn) of 8,000 to 50,000.
[6] The curable adhesive composition for a battery according to any one of [1] to [5], wherein the thermally conductive filler is at least one selected from the group consisting of metal oxide, metal hydroxide, metal nitride, and metal carbide.
[7] The curable adhesive composition for a battery according to any one of [1] to [6], wherein the thermally conductive filler comprises aluminum hydroxide that is not surface-treated.
[8] The curable adhesive composition for a battery according to any one of [1] to [7], having a viscosity (25°C, rotational speed 10 rpm) of 100 to 1000 Pa·s.
[9] The curable adhesive composition for a battery according to [2], wherein the first agent has a viscosity η 1 (25°C, rotational speed 10 rpm) of 100 to 1000 Pa·s, the second agent has a viscosity η2 (25°C, rotational speed 10 rpm) of 100 to 1000 Pa·s, and an absolute value of difference between the viscosity η 1 and the viscosity η2 is 300 Pa·s or less.
[10] The curable adhesive composition for a battery according to any one of [1] to [9], further comprising a plasticizer.
[11] The curable adhesive composition for a battery according to [10], wherein the plasticizer is at least one selected from the group consisting of a (meth)acrylate polymer having no hydrolyzable silyl group and a polyalkylene oxide having no hydrolyzable silyl group.
[12] A battery module comprising a case and a plurality of cells disposed in the case, wherein an adhesive layer is disposed in at least one of between the case and a cell and between the plurality of cells,
   the adhesive layer is a cured product of a curable adhesive composition for a battery comprising a hydrolyzable silyl group-containing organic polymer and a thermally conductive filler, and the cured product has a Shore A hardness of 90 or less and a shear strength of 0.5 to 5 MPa.
[13] A battery pack comprising a battery pack housing and a plurality of battery modules disposed in the battery pack housing, wherein an adhesive layer is disposed in at least one of between the battery pack housing and a battery module and between the plurality of battery modules,
   the adhesive layer is a cured product of a curable adhesive composition for a battery comprising a hydrolyzable silyl group-containing organic polymer and a thermally conductive filler, and the cured product has a Shore A hardness of 90 or less and a shear strength of 0.5 to 5 MPa.

### Advantageous Effects of Invention

The present invention is capable of providing a curable adhesive composition for a battery, the composition having good reworkability while having suitable adhesion.

### Brief Description of Drawings

[Fig. 1] Fig. 1 is a cross-sectional view schematically showing one embodiment of a battery module.
[Fig. 2] Fig. 2 is a perspective view showing a representative configuration of a battery cell included in the battery module.
[Fig. 3] Fig. 3 is a cross-sectional view schematically showing another embodiment of the battery module.
[Fig. 4] Fig. 4 is a cross-sectional view schematically showing one embodiment of a battery pack.

### Description of Embodiments

### [Curable adhesive composition for battery]

The present invention is a curable adhesive composition for a battery, comprising a hydrolyzable silyl group-containing organic polymer and a thermally conductive filler, wherein a cured product of the curable adhesive composition for a battery has a Shore A hardness of 90 or less and a shear strength of 0.5 to 5 MPa. Below the curable adhesive composition for a battery of the present invention may be simply referred to as an adhesive composition.

Herein, a range indicated by "-" means a range including the lower limit value set forth before "-" and the upper limit value set forth after "-".

### <Shear strength>

The cured product of the adhesive composition of the present invention has a shear strength of 0.5 to 5 MPa. A shear strength of less than 0.5 MPa results in poor adhesion, and suitable adhesion cannot be ensured, thus making it difficult to secure the components of a battery. On the other hand, a shear strength exceeding 5 MPa results in excessive adhesion, thus making it difficult to separate the components, and even when the components are separated, cohesive failure of an adhesive occurs, and the adhesive remains on the surfaces of the components, thus deteriorating reworkability.

From the viewpoint of suitable adhesion and improved reworkability, the shear strength of the adhesive composition after being cured is preferably 1 to 5 MPa, and more preferably 2 to 4.5 MPa.

Herein, shear strength can be regulated to the desired range by regulating the kind of the hydrolyzable silyl group-containing organic polymer, the kind and the amount of the thermally conductive filler used, and the presence or absence of surface treatment of the thermally conductive filler.

The shear strength is shear strength obtained using an aluminum plate as an adherend and is tensile shear strength measured with a test piece obtained by applying the adhesive composition between 2 aluminum plates and curing the adhesive composition for 7 days in an environment having 23°C and 50% RH, and details are as described in the Examples. RH denotes relative humidity.

Moreover, when a polycarbonate plate is used as an adherend, the shear strength of the cured product of the adhesive composition from the viewpoint of ensuring suitable adhesion and providing good reworkability is preferably 0.5 to 5 MPa, and more preferably 0.5 to 1.5 MPa.

The shear strength in the case of using a polycarbonate plate as an adherend is tensile shear strength measured with a test piece obtained by applying the adhesive composition between 2 polycarbonate plates and curing the adhesive composition for 7 days in an environment having 23°C and 50% RH, and details are as described in the Examples.

### <Shore A hardness>

The adhesive composition after being cured has a Shore A hardness of 90 or less. A Shore A hardness exceeding 90 tends to result in poor workability. Shore A hardness is preferably 85 or less and more preferably 80 or less, and is preferably 5 or more and more preferably 10 or more.

Also, the Shore A hardness of the adhesive composition after being cured is preferably 5 to 90 and more preferably 10 to 80.

Moreover, from the viewpoint of providing good reworkability, the Shore D hardness of the adhesive composition after being cured is preferably 3 or more and more preferably 5 or more, and is preferably 50 or less and more preferably 40 or less.

Also, the Shore D hardness of the adhesive composition after being cured is preferably 3 to 50 and more preferably 5 to 40.

Shore A hardness and Shore D hardness are values measured when the adhesive composition is cured in an environment having 23°C and 50% RH for 7 days, and are measured in accordance with JIS K6253. Details are as described in the Examples.

### <Hydrolyzable silyl group-containing organic polymer>

The adhesive composition of the present invention contains an hydrolyzable silyl group-containing organic polymer.

The hydrolyzable silyl group contained in the organic polymer is hydrolyzed by water such as moisture to form a silanol group, then silanol groups, or a silanol group and a hydrolyzable silyl group, undergo condensation polymerization, and thereby a siloxane bond can be formed. Accordingly, the organic polymer forms a crosslinked structure, thus curing the adhesive composition, and thereby a rubber-like elastic body is obtained. Note that the silanol group means a hydroxy group directly bonded to a silicon atom (Si-OH).

The hydrolyzable silyl group is a group composed of 1 to 3 hydrolyzable groups bonded to a silicon atom. The hydrolyzable group of the hydrolyzable silyl group is not particularly limited, and examples include a hydrogen atom, a halogen atom, an alkoxy group, an acyloxy group, a ketoximate group, an amino group, an amide group, an acid amide group, an aminooxy group, a mercapto group, and an alkenyloxy group.

In particular, the hydrolyzable silyl group is preferably an alkoxysilyl group because the hydrolysis reaction is moderate. Examples of the alkoxysilyl group include trialkoxysilyl groups such as a trimethoxysilyl group, a triethoxysilyl group, a triisopropoxysilyl group, and a triphenoxysilyl group, dialkoxysilyl groups such as a dimethoxymethylsilyl group and a diethoxymethylsilyl group, and monoalkoxysilyl groups such as a methoxydimethylsilyl group and an ethoxydimethylsilyl group. In particular, a dialkoxysilyl group is more preferable, and a dimethoxymethylsilyl group is particularly preferable.

One molecule of the hydrolyzable silyl group-containing organic polymer preferably has 1 to 3 hydrolyzable silyl groups on average. When the number of hydrolyzable silyl groups in the polymer is equal to or greater than a specific number, the adhesive composition is readily cured. Also, when the number of hydrolyzable silyl groups in the polymer is equal to or less than a specific number, a rubber-like elastic body obtained by curing the adhesive composition has increased breaking strength, and adhesion is improved.

The average number of hydrolyzable silyl groups in one molecule of the hydrolyzable silyl group-containing organic polymer can be calculated based on the concentration of hydrolyzable silyl groups in the organic polymer determined by ¹H-NMR and the number-average molecular weight of the polymer determined by GPC method.

The method for introducing a hydrolyzable silyl group into an organic polymer is not particularly limited, and examples include (1) a method involving hydrosilylation by causing a hydrolyzable silyl group-containing hydrosilane to act on an organic polymer modified with an unsaturated group within the molecule, (2) a method causing an organic polymer modified with an unsaturated group within the molecule to react with a mercapto group and a hydrolyzable silyl group-containing compound, and (3) a method causing an organic polymer having a functional group within the molecule to react with a compound having a hydrolyzable silyl group and a functional group reactive with the aforementioned functional group. Specifically, usable are a reaction between an isocyanate group and a hydroxyl group, a reaction between an isocyanate group and an amino group, a reaction between an isocyanate group and a mercapto group, and the like.

The organic polymer of the hydrolyzable silyl group-containing organic polymer is not particularly limited, and examples include polyalkylene oxides such as polyethylene oxide, polypropylene oxide, polybutylene oxide, polytetramethylene oxide, a polyethylene oxide-polypropylene oxide copolymer, and a polypropylene oxide-polybutylene oxide copolymer; saturated hydrocarbon polymers; copolymers of polychloroprene, polyisoprene, isoprene or butadiene with acrylonitrile and/or styrene; copolymers of polybutadiene, isoprene or butadiene with acrylonitrile and styrene; (meth)acrylate polymers obtained by radical polymerization of monomers such as ethyl (meth)acrylate and butyl (meth)acrylate; vinyl polymers obtained by radical polymerization of monomers such as vinyl acetate, acrylonitrile, and styrene; graft polymers obtained by polymerizing a vinyl monomer in the above polymers; polysulfide polymers; nylon 6 obtained by ring-opening polymerization of ε-caprolactam; nylon 6,6 by condensation polymerization of hexamethylene diamine and adipic acid; nylon 6,10 obtained by condensation polymerization of hexamethylene diamine and sebacic acid; nylon 11 obtained by condensation polymerization of ε-aminoundecanoic acid, nylon 12 obtained by ring-opening polymerization of ε-aminolaurolactam, polyamide polymers such as copolymerized nylon having two or more components among the above nylons; polycarbonate polymers produced by condensation polymerization of bisphenol A and carbonyl chloride; and diallyl phthalate polymers. Herein, (meth)acrylate means methacrylate or acrylate.

Among these, the organic polymer is preferably polyalkylene oxide from the viewpoint of having the shear force of the cured adhesive composition within the desired range. That is to say, the hydrolyzable silyl group-containing organic polymer is preferably hydrolyzable silyl group-containing polyalkylene oxide. Polypropylene oxide is particularly preferable polyalkylene oxide.

The hydrolyzable silyl group-containing organic polymer preferably has a number-average molecular weight (Mn) of 8,000 or more, and more preferably 10,000 or more. When the number-average molecular weight of the hydrolyzable silyl group-containing organic polymer is equal to or greater than these lower limits, a cured product of the resulting adhesive composition unlikely becomes brittle, and the hardness and the stretchability of the cured product are improved.

Also, the number-average molecular weight (Mn) of the hydrolyzable silyl group-containing organic polymer is preferably 50,000 or less, and more preferably 40,000 or less. When the number-average molecular weight of the hydrolyzable silyl group-containing organic polymer is equal to or less than these upper limits, the viscosity of the resulting adhesive composition is low, and the coatability of the adhesive composition is improved.

Moreover, the number-average molecular weight (Mn) of the hydrolyzable silyl group-containing organic polymer is preferably 8,000 to 50,000, and more preferably 10,000 to 40,000. When the number-average molecular weight of the hydrolyzable silyl group-containing organic polymer is within the above ranges, the viscosity of the resulting adhesive composition is low, the coatability of the adhesive composition is improved, moreover, a cured product of the resulting adhesive composition unlikely becomes brittle, and the hardness and the stretchability of the cured product are improved.

Herein, the number-average molecular weight of the hydrolyzable silyl group-containing organic polymer means a value measured in terms of polystyrene by GPC (gel permeation chromatography) method. In the measurement by GPC method, a GPC column such as Shodex KF800D manufactured by Tosoh Corporation can be used, and chloroform can be used as a solvent.

The hydrolyzable silyl group-containing organic polymer may be a commercially available product. For example, polyalkylene oxide polymers in which the backbone of main chain is polypropylene oxide and which have a dimethoxysilyl group at the terminal of the backbone of main chain include those having a product name "Excester A2410" manufactured by Asahi Glass Co., Ltd., and a product name "S203" manufactured by Kaneka Corporation.

### <Thermally conductive filler>

The adhesive composition of the present invention contains a thermally conductive filler. By containing a thermally conductive filler, the heat dissipation properties of an adhesive made of the cured product of the composition can be enhanced.

The average particle size of the thermally conductive filler is preferably 0.1 to 200 µm, more preferably 0.5 to 100 µm, and even more preferably 1 to 70 µm.

In the thermally conductive filler, a small particle size thermally conductive filler and a large particle size thermally conductive filler are preferably used in combination. By using such fillers in combination, thermal conductivity can be effectively increased, and the heat dissipation properties are improved, without increasing the total amount of the thermally conductive filler. When using a small particle size thermally conductive filler and a large particle size thermally conductive filler in combination, the mass ratio of the small particle size thermally conductive filler to the large particle size thermally conductive filler (small particle size thermally conductive filler/large particle size thermally conductive filler) is preferably 0.05 to 5, more preferably 0.08 to 2, and even more preferably 0.1 to 0.8.

When using a small particle size thermally conductive filler and a large particle size thermally conductive filler in combination, thermally conductive fillers having a 3 times or more difference between average particle sizes are preferably combined. The average particle size of the small particle size thermally conductive filler is, for example, 0.1 µm or more and 5 µm or less, and the average particle size of the large particle size thermally conductive filler is preferably more than 5 µm and 200 µm or less.

The content of the thermally conductive filler in the adhesive composition is, for example, 150 to 3000 parts by mass, preferably 200 to 2000 parts by mass, and more preferably 300 to 1200 parts by mass, based on 100 parts by mass of the hydrolyzable silyl group-containing organic polymer. When the content of the thermally conductive filler is equal to or higher than these lower limits, the thermal conductivity of the cured product of the adhesive composition is increased, and the heat dissipation properties are improved. When the content of the thermally conductive filler is equal to or lower than these upper limit values, the viscosity of the adhesive composition is lowered, and the handleability is improved.

Examples of the thermally conductive filler include metal oxide, metal hydroxide, metal nitride, metal carbide, non-metal nitride, and non-metal carbide, and, in particular, the thermally conductive filler is preferably at least one selected from the group consisting of metal oxide, metal hydroxide, metal nitride, and metal carbide. Examples of the shape of the thermally conductive filler include a spherical shape and an irregularly shaped powder.

Examples of metal oxide include aluminum oxide represented by alumina, magnesium oxide, and zinc oxide. Examples of metal hydroxide include aluminum hydroxide. Examples of metal nitride include aluminum nitride and silicon nitride. Examples of metal carbide include silicon carbide. Examples of non-metal nitride include boron nitride. Examples of non-metal carbide include boron carbide.

Among these, from the viewpoint of increasing the shear strength of the cured product of the adhesive composition, the thermally conductive filler preferably contains at least one of aluminum hydroxide and aluminum oxide, and more preferably contains aluminum hydroxide.

Also, from the viewpoint of improving the shear strength of the cured product and the shear strength in a well-balanced manner, the use of aluminum hydroxide and aluminum oxide in combination is also preferable.

From the viewpoint of increasing the shear strength of the cured product, aluminum hydroxide is preferably aluminum hydroxide that is not surface-treated. Note that the present invention does not exclude the use of surface-treated aluminum hydroxide. Surface treatment is carried out by, for example, reacting a surface treating agent such as a silane coupling agent with the surface of the thermally conductive filler.

From the viewpoint of increasing the shear strength of the cured product, aluminum hydroxide is preferably small particle size aluminum hydroxide. That is to say, the thermally conductive filler preferably contains small particle size aluminum hydroxide (aluminum hydroxide having an average particle size of 0.1 to 5 µm). Moreover, from the viewpoint of increasing the shear strength of the cured product, small particle size aluminum hydroxide is preferably small particle size aluminum hydroxide that is not surface-treated.

In the adhesive composition, the content of small particle size aluminum hydroxide when used is preferably 10 to 1200 parts by mass, more preferably 50 to 600 parts by mass, and even more preferably 150 to 400 parts by mass, based on 100 parts by mass of the hydrolyzable silyl group-containing organic polymer from the viewpoint of making it easy to regulate the shear strength to the desired range.

From the viewpoint of improving thermal conductivity, small particle size aluminum hydroxide and large particle size aluminum hydroxide are preferably used in combination. In the adhesive composition, the content of large particle size aluminum hydroxide when used is preferably 50 to 2000 parts by mass, more preferably 200 to 1500 parts by mass, and even more preferably 300 to 1200 parts by mass based on 100 parts by mass of the hydrolyzable silyl group-containing organic polymer.

When using small particle size aluminum hydroxide and large particle size aluminum hydroxide in combination, the mass ratio of small particle size aluminum hydroxide to large particle size aluminum hydroxide (small particle size aluminum hydroxide/large particle size aluminum hydroxide) is preferably 0.05 to 5, more preferably 0.08 to 2, and even more preferably 0.1 to 0.5.

The average particle size of small particle size aluminum hydroxide is, for example, 0.1 µm or more and 5 µm or less, and the average particle size of large particle size aluminum hydroxide is preferably more than 5 µm and 200 µm or less.

As described above, aluminum hydroxide and aluminum oxide are preferably used in combination. In this case, the content of aluminum oxide when used is preferably 50 to 2000 parts by mass, more preferably 100 to 1500 parts by mass, and even more preferably 150 to 1200 parts by mass, based on 100 parts by mass of the hydrolyzable silyl group-containing organic polymer.

Note that, even when aluminum hydroxide and aluminum oxide are used in combination, aluminum hydroxide is preferably aluminum hydroxide that is not surface-treated as described above. Also, small particle size aluminum hydroxide and large particle size aluminum hydroxide are preferably used in combination.

### <Silanol condensation catalyst>

The adhesive composition of the present invention preferably contains a silanol condensation catalyst. The silanol condensation catalyst is a catalyst for catalyzing the dehydrative condensation reaction of silanol groups formed by hydrolysis of hydrolyzable silyl groups contained in the above-described organic polymer or alkoxysilyl groups contained in the silane coupling agent.

Examples of the silanol condensation catalyst include organotin compounds such as dibutyltin dilaurate, dibutyltin oxide, dibutyltin diacetate, dibutyltin phthalate, bis(dibutyltin lauric acid) oxide, dibutyltin bis(acetylacetonate), dibutyltin bis(monoester malate), tin octylate, dibutyltin octoate, dioctyltin oxide, dibutyltin bis(triethoxysilicate), bis(dibutyltin bistriethoxysilicate) oxide, dibutyltin oxybisethoxysilicate, and 1,1,3,3-tetrabutyl-1,3-dilauryloxycarbonyl-distanoxane; and organotitanium compounds such as tetra-n-butoxy titanate and tetraisopropoxy titanate. One of these silanol condensation catalysts may be used singly, or two or more may be used in combination.

Among the above silanol condensation catalysts, organotin compounds are preferable and, in particular, dioctyltin oxide is more preferable, from the viewpoint of the easiness of regulating the curing rate.

The content of the silanol condensation catalyst in the adhesive composition is preferably 1 to 10 parts by mass, and more preferably 1 to 5 parts by mass, based on 100 parts by mass of the hydrolyzable silyl group-containing organic polymer. A content of the silanol condensation catalyst of equal to or higher than these lower limits enables the curing rate to be increased, and a content of a silanol condensation catalyst of equal to or lower than these upper limits enables deterioration of the thermal stability of the curable adhesive composition for a battery to be suppressed.

### <Aminosilane coupling agent>

Preferably, the adhesive composition of the present invention further contains an aminosilane coupling agent. The aminosilane coupling agent can further improve the adhesion of the adhesive made of the cured product of the adhesive composition.

Specific examples of the aminosilane coupling agent include 3-aminopropyltrimethoxysilane, 3-aminopropylmethyldimethoxysilane, 3-aminopropyltriethoxysilane, N-(2-aminoethyl)-3-aminopropyltrimethoxysilane, N-(2-aminoethyl)-3-aminopropyltriethoxysilane, N,N'-bis-[3-(trimethoxysilyl)propyl]ethylenediamine, N,N'-bis-[3-(triethoxysilyl)propyl]ethylenediamine, N,N'-bis-[3-(methyldimethoxysilyl)propyl]ethylenediamine, N,N'-bis-[3-(trimethoxysilyl)propyl]hexamethylenediamine, and N,N'-bis-[3-(triethoxysilyl)propyl]hexamethylenediamine. In particular, N-(2-aminoethyl)-3-aminopropyltrimethoxysilane is preferable.

The content of the aminosilane coupling agent in the adhesive composition is preferably 1 to 10 parts by mass, and more preferably 1 to 5 parts by mass, based on 100 parts by mass of the hydrolyzable silyl group-containing organic polymer. When the content of the aminosilane coupling agent is equal to or higher than these lower limits, the adhesion of the resulting adhesive is likely improved, and when the content of the aminosilane coupling agent is equal to or lower than these upper limits, the resulting adhesive can be prevented from becoming brittle and, accordingly, deterioration of adhesive strength can be suppressed.

### <Dehydrating agent>

Preferably, the adhesive composition of the present invention further contains a dehydrating agent. The dehydrating agent suppresses curing of the adhesive composition caused by moisture contained in air or the like when the adhesive composition is stored.

Examples of the dehydrating agent include silane compounds such as vinyltrimethoxysilane, dimethyldimethoxysilane, tetraethoxysilane, methyltrimethoxysilane, methyltriethoxysilane, tetramethoxysilane, phenyltrimethoxysilane, and diphenyldimethoxysilane, and ester compounds such as methyl orthoformate, ethyl orthoformate, methyl orthoacetate, and ethyl orthoacetate. One of these dehydrating agents may be used singly, or two or more may be used in combination. In particular, vinyltrimethoxysilane is preferable.

The content of the dehydrating agent in the adhesive composition is preferably 0.5 to 20 parts by mass, and more preferably 1 to 10 parts by mass, based on 100 parts by mass of the hydrolyzable silyl group-containing organic polymer. When the content of the dehydrating agent is equal to or higher than these lower limits, curing during storage is likely suppressed, and when the content of the dehydrating agent is equal to or lower than these upper limits, deterioration of the curability of the adhesive composition caused by the dehydrating agent can be unlikely to occur.

### <Plasticizer>

The adhesive composition of the present invention may further contain a plasticizer. By containing a plasticizer, the stretchability of the adhesive is likely improved, and workability and like properties are improved.

For example, a compound that does not have a hydrolyzable silyl group can be used as a plasticizer in the above-described hydrolyzable silyl group-containing organic polymer, and, preferably, at least one selected from the group consisting of (meth)acrylate polymers that do not have a hydrolyzable silyl group and polyalkylene oxide that does not have a hydrolyzable silyl group is preferable. Polyalkylene oxide is more preferably polypropylene oxide.

Preferably, the plasticizer is compatible with the hydrolyzable silyl group-containing organic polymer.

For example, when a compound that is the same type of an organic polymer as the hydrolyzable silyl group-containing organic polymer and that does not have a hydrolyzable silyl group is used as a plasticizer, this compound is compatible with the hydrolyzable silyl group-containing organic polymer. For example, when polyalkylene oxide that does not have a hydrolyzable silyl group is used as a plasticizer together with hydrolyzable silyl group-containing polyalkylene oxide, these compounds are compatible with each other.

The number-average molecular weight of the plasticizer is preferably 500 or more, and more preferably 1,000 or more. When the number-average molecular weight of the plasticizer is equal to or higher than these lower limits, the difference between the viscosities of the plasticizer and the hydrolyzable silyl group-containing organic polymer can be small, and when a combination of a first agent and a second agent, which will be described below, is employed, the first agent and the second agent can be readily mixed.

Also, the number-average molecular weight of the plasticizer is preferably 10,000 or less, and more preferably 5,000 or less. When the number-average molecular weight of the plasticizer is equal to or lower than these upper limits, the adhesive composition is sufficiently plasticized, and the cured product has excellent rubber elasticity.

Moreover, the number-average molecular weight of the plasticizer is preferably 500 to 10,000, and more preferably 1,000 to 5,000. When the number-average molecular weight of the plasticizer is within the above ranges, the first agent and the second agent have excellent miscibility, in addition, the adhesive composition is sufficiently plasticized, and the cured product can have excellent rubber elasticity.

While the above compound that does not have a hydrolyzable silyl group is preferably used as a plasticizer, the following low molecular weight plasticizers may be used as well. Specific examples include organic ester plasticizers such as monobasic organic acid esters and polybasic organic acid esters, organic phosphoric acid plasticizers such as organic phosphoric acid plasticizers and organic phosphorous acid plasticizers, sulfonamide, and epoxy plasticizers such as epoxidized soybean oil. The plasticizer is preferably an organic ester plasticizer.

Examples of the monobasic organic acid esters include glycol esters obtained by reacting glycols with monobasic organic acids. Examples of the glycols include triethylene glycol, tetraethylene glycol, and tripropylene glycol. Examples of the monobasic organic acids include butyric acid, isobutyric acid, caproic acid, 2-ethylbutyric acid, heptylic acid, n-octylic acid, 2-ethylhexylic acid, n-nonylic acid, decylic acid, and benzoic acid.

Examples of the polybasic organic acid esters include ester compounds of polybasic organic acids and linear or branched alcohols having 4 to 8 carbon atoms. Examples of the polybasic organic acids include adipic acid, sebacic acid, and azelaic acid.

Examples of the organic ester plasticizers include triethylene glycol di-2-ethylpropanoate, triethylene glycol di-2-ethyl butyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutylcarbitol adipate, ethylene glycol di-2-ethyl butyrate, 1,3-propylene glycol di-2-ethyl butyrate, 1,4-butylene glycol di-2-ethyl butyrate, diethylene glycol di-2-ethyl butyrate, diethylene glycol di-2-ethylhexanoate, dipropylene glycol di-2-ethyl butyrate, triethylene glycol di-2-ethyl pentanoate, tetraethylene glycol di-2-ethyl butyrate, diethylene glycol dicaprylate, diethylene glycol dibenzoate, dipropylene glycol dibenzoate, dihexyl adipate, dioctyl adipate, hexylcyclohexyl adipate, a mixture of heptyl adipate and nonyl adipate, diisononyl adipate, diisodecyl adipate, heptylnonyl adipate, dibutyl sebacate, oil-modified sebacic acid alkyd, and a mixture of a phosphoric acid ester and an adipic acid ester. Other organic ester plasticizers than these plasticizers may be used as well. Other adipic acid esters than the above adipatic acid esters may be used as well.

Examples of the organic phosphoric acid plasticizer include tributoxyethyl phosphate, isodecylphenyl phosphate, and triisopropyl phosphate.

The plasticizer is preferably a diester plasticizer represented by the following formula (1).

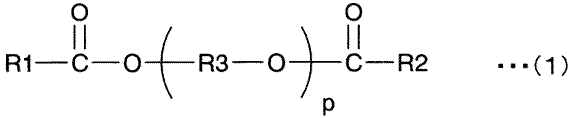

In formula (1), R1 and R2 each represent an organic group having 2 to 10 carbon atoms, R3 represents an ethylene group, an isopropylene group or a n-propylene group, and p represents an integer of 3 to 10. R1 and R2 in formula (1) are each preferably an organic group having 5 to 10 carbon atoms, and more preferably an organic group having 6 to 10 carbon atoms.

The plasticizer preferably contains triethylene glycol di-2-ethylhexanoate (3GO), triethylene glycol di-2-ethylbutyrate (3GH), or triethylene glycol di-2-ethylpropanoate. The plasticizer more preferably contains triethylene glycol di-2-ethylhexanoate (3GO) or triethylene glycol di-2-ethylbutyrate (3GH), and even more preferably triethylene glycol di-2-ethylhexanoate.

The molecular weight of the low molecular weight plasticizer is preferably less than 1000 and more preferably less than 500, and is preferably 50 or more and more preferably 100 or more. Moreover, the molecular weight of the low molecular weight plasticizer is preferably 50 or more and less than 1000, and more preferably 100 or more and less than 500.

The content of the plasticizer in the adhesive composition is preferably 150 parts by mass or less, more preferably 100 parts by mass or less, and particularly preferably 1 to 100 parts by mass, based on 100 parts by mass of the hydrolyzable silyl group-containing organic polymer. A content of the plasticizer in the adhesive composition within the above range results in a cured product of the adhesive composition having excellent stretchability.

The adhesive composition of the present invention may contain other additives such as thixotropic agents, antioxidants, ultraviolet absorbers, pigments, dyes, antisettling agents, and solvents.

The viscosity at 25°C of the adhesive composition of the present invention is preferably 100 to 1000 Pa·s, and more preferably 150 to 700 Pa·s. A viscosity within such a range results in an adhesive composition having excellent handleability. The above viscosity is the viscosity when applying the adhesive composition, and, for example, in the case of employing a combination of a first agent and a second agent, which will be described below, the first agent and the second agent are readily mixed when the respective viscosities of the first agent and the second agent are within the above range, and, also, the adhesive composition is readily applied when the viscosity immediately after mixing the first agent and the second agent is within the above range.

Note that the viscosity of the adhesive composition of the present invention and the viscosities of the first agent and the second agent described below are the viscosities at 25°C at a rotational speed of 10 rpm, and are the viscosities measured with a B-type viscometer.

The adhesive composition of the present invention can be produced by mixing a hydrolyzable silyl group-containing organic polymer, a thermally conductive filler, and an optionally used silanol condensation catalyst, plasticizer, aminosilane coupling agent, dehydrating agent, and other additives. Also, as will be described below, the adhesive composition can be produced by separately storing the first agent and the second agent, and then mixing the first agent and the second agent.

### <First agent, second agent>

The adhesive composition of the present invention is preferably used after separately storing a first agent containing a hydrolyzable silyl group-containing organic polymer and a thermally conductive filler and a second agent containing a silanol condensation catalyst.

By separately storing the first agent and the second agent, curing of the composition resulting from polymerization of the hydrolyzable silyl group-containing organic polymer during storage can be suppressed, and thus storage stability is increased.

The first agent and the second agent are preferably stored in a first container and a second container, respectively. That is to say, the present invention can also provide a curable adhesive composition for a battery, which is composed of a first agent containing a hydrolyzable silyl group-containing organic polymer and a thermally conductive filler and filled in a first container and a second agent containing a silanol condensation catalyst and filled in a second container. Note that examples of containers used as the first container and the second container include syringes, cartridges, pails, and drums.

The first agent contains a hydrolyzable silyl group-containing organic polymer and a thermally conductive filler. Details of the hydrolyzable silyl group and the thermally conductive filler are as described above.

The first agent may contain the above-described dehydrating agent as necessary, and may further contain the above-described aminosilane coupling agent as necessary.

The second agent contains a silanol condensation catalyst. Details of the silanol condensation catalyst are as described above. The second agent does not contain the hydrolyzable silyl group-containing organic polymer. Thereby, the silanol condensation catalyst and the hydrolyzable silyl group-containing organic polymer are not concomitantly present, and thus curing during storage can be suppressed.

In addition to the silanol condensation catalyst, the second agent may also contain a thermally conductive filler, a plasticizer, and water as necessary.

The second agent preferably contains the above-described thermally conductive filler. That is to say, the first agent and the second agent both preferably contain a thermally conductive filler. Accordingly, the compositional uniformity of the adhesive composition prepared by mixing these two agents is increased. The thermally conductive filler contained in the second agent is of the same type as the thermally conductive filler contained in the first agent. Preferably, the amount of the thermally conductive filler contained in each of the first agent and the second agent is approximately the same based on 100 parts by mass of the hydrolyzable silyl group-containing organic polymer contained in the first agent. Thereby, the first agent and the second agent are readily regulated to have approximately the same weights, and a uniform adhesive composition is readily prepared.

The second agent preferably contains water. Thereby, after the adhesive composition is prepared by mixing the first agent and the second agent, even the inner portion of the composition can be promptly cured, which is preferable.

The content of water in the second agent is preferably 0.1 to 20 parts by mass, more preferably 0.5 to 15 parts by mass, and even more preferably 1 to 10 parts by mass, based on 100 parts by mass of the hydrolyzable silyl group-containing organic polymer contained in the first agent.

Note that the amount of each component, i.e., the above-described thermally conductive filler, aminosilane coupling agent, dehydrating agent, and plasticizer, contained in either or both of the first agent and the second agent is suitably regulated such that the amount of each component in the adhesive composition prepared by mixing the first agent and the second agent is within the above ranges.

For example, while maintaining the thermally conductive filler at a specific level, the amount of plasticizer can be regulated such that the same volume of the first agent and the second agent can be mixed. At that time, the viscosities of the first agent and the second agent are preferably regulated so as to be comparable to each other by regulating the viscosity of the plasticizer.

The mass ratio of the first agent to the second agent (second agent/first agent) is preferably 1 or a value close to 1, and, in particular, preferably 0.9 to 1.1, and more preferably 0.95 to 1.05. Accordingly, regulating the mass ratio of the first agent to the second agent to 1 or a value close to 1 facilitates preparation of a mixture of the first agent and the second agent.

The viscosity η1 of the first agent at 25°C is preferably 100 to 1000 Pa·s, and more preferably 200 to 800 Pa·s. The viscosity η2 of the second agent at 25°C is preferably 100 to 1000 Pa·s, and more preferably 200 to 800 Pa·s. When the viscosities of the first agent and the second agent are within the above ranges, both agents have good handleability.

Moreover, the absolute value of the difference between the viscosity η1 and the viscosity η2 is preferably 300 Pa·s or less, more preferably 200 Pa·s or less, and even more preferably 150 Pa·s or less. When the difference between the viscosity η1 and the viscosity η2 is small in this way, mixing of the first part and the second part is easy, and a highly uniform adhesive composition is readily obtained. The lower limit of the absolute value of the difference between the viscosity η1 and the viscosity η2 is 0 Pa·s.

### <Battery module>

The cured product of the adhesive composition of the present invention can be used as an adhesive layer used in a battery module. Below, the battery module will now be described with reference to the drawings.

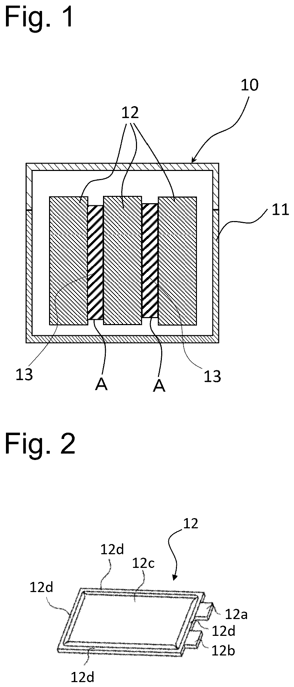

Fig. 1 shows a battery module 10 including a case 11 and a plurality of cells 12 disposed in the case 11. Each cell 12 is disposed such that their flat surfaces face each other. An adhesive layer 13 is disposed in a space A between the plurality of cells 12 and may be adhered thereto.

The adhesive layer 13 is a cured product of the above-described adhesive composition containing a hydrolyzable silyl group-containing organic polymer and a thermally conductive filler, and the cured product has a Shore A hardness of 90 or less and a shear strength of 0.5 to 5 MPa. Accordingly, the cells 12 are secured with suitable adhesion by the adhesive layer 13, the cells 12 can be easily separated when separating the cells 12 from each other during repairing or recycling, the adhesive layer 13 undergoes interfacial peeling on the surfaces of the cells 12, and thus the adhesive unlikely remains on the surfaces of the cells 12. That is to say, the adhesive layer 13 has excellent reworkability. Moreover, the adhesive layer 13 contains a thermally conductive filler and thus has excellent heat dissipation properties.

The cell 12 is a constitutional unit of a lithium-ion secondary battery and the like, and is generally composed of an exterior film and battery elements (not shown) enclosed within the exterior film. Examples of battery elements include a positive electrode, a negative electrode, a separator, and an electrolyte solution. As shown in Fig. 2, the cell 12 is a flat body that the thickness is smaller than the width, a positive electrode 12a and a negative electrode 12b appear outside, and a flat surface 12c is formed to be thicker than a crimped end portion 12d.

While the cell 12 is depicted as a laminated cell provided with an exterior film, a prismatic cell and a cylindrical cell may also be used in addition to the laminated cell.

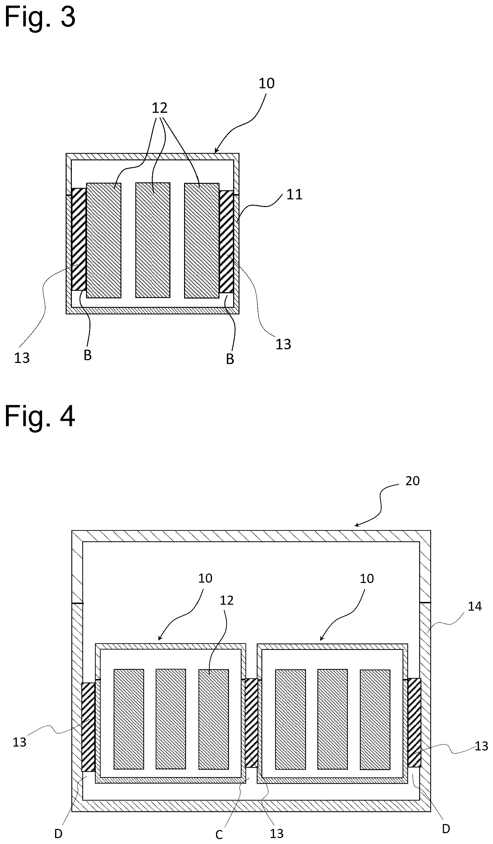

As shown in Fig. 3, the adhesive layer 13 can also be provided in a space B between the case 11 and the cell 12. In this case as well, the cell 12 and the case 13 are secured with suitable adhesion, and have excellent reworkability when being separated during repairing or recycling.

The adhesive layer 13 is provided in at least one of the space B between the case 11 and the cell 12 and the space A between the plurality of cells 12. Although not shown, the adhesive layer 13 may be provided in both the space B between the case 11 and the cell 12 and the space A between the plurality of cells 12.

### <Battery pack>

The cured product of the adhesive composition of the present invention can be used as an adhesive layer used in a battery pack. Below, the battery pack will now be described with reference to the drawings.

Fig. 4 shows a battery pack 20 including a battery pack housing 14 and a plurality of battery modules 10 disposed in the battery pack housing 14. The adhesive layer 13 is disposed in a space C between the plurality of battery modules 10 and may be adhered thereto.

The adhesive layer 13 is a cured product of the above-described adhesive composition containing a hydrolyzable silyl group-containing organic polymer and a thermally conductive filler, and has a Shore A hardness of 90 or less and a shear strength of 0.5 to 5 MPa. Accordingly, the battery modules 10 are secured with suitable adhesion by the adhesive layer 13, the battery modules 10 can be easily separated when separating the battery modules 10 from each other during repairing or recycling, the adhesive undergoes interfacial peeling on the surfaces of the battery modules 10, and thus the adhesive unlikely remains on the surfaces of the battery modules 10. That is to say, the adhesive layer 13 has excellent reworkability. Moreover, the adhesive layer 13 contains a thermally conductive filler and thus has excellent heat dissipation properties.

In Fig. 4, the adhesive layer 13 is disposed in a space D between the battery pack housing 14 and the battery modules 10 and may be adhered thereto. In this case as well, the battery pack housing 14 and the battery module 10 are secured with suitable adhesion, and excellent reworkability when being separated during repairing or recycling is achieved.

Note that, while Fig. 4 shows an embodiment in which the adhesive layer 13 is disposed in or adhered to both the space D between the battery pack housing 14 and the battery modules 10 and the space C between the plurality of battery modules 10, the adhesive layer 13 may be disposed in or adhered to at least one of the space D between the battery pack housing 14 and the battery modules 10 and the space C between the plurality of battery modules 10.

Also, while Fig. 4 shows an embodiment in which the adhesive layer 13 is not used inside the battery module 10, the adhesive layer 13 may be provided also in the battery module 10 disposed inside the battery pack as shown in Figs. 1 and 3.

### Examples

Below, the present invention will now be described in more detail by way of Examples, but the present invention is not limited to the Examples in any way.

In the Examples, evaluations were made by the following methods.

### [Shear Strength 1 (Shear strength using aluminum plate as adherend)]

Shear strength was measured in accordance with the tensile shear test of JIS K6850:1999. The test piece was prepared by providing two aluminum plates each having a length of 100 mm, a width of 25 mm, and a thickness of 1 mm, placing the aluminum plates one on top of the other such that the edges overlap with each other with a length and a width of 25 mm × 25 mm, applying an adhesive composition therebetween to have a thickness of 1.5 mm, and curing the adhesive composition for 7 days in an environment having 23°C and 50% RH. Using a tensile tester (Toyo Seiki Seisaku-sho, Ltd., "STROGRAFH VE50"), a tensile test was carried out in a condition having a room temperature of 23°C and a tensile speed of 300 mm/min to measure tensile shear strength.

### [Shear Strength 2 (Shear strength using polycarbonate plate as adherend)]

Shear strength was measured in the same manner as in Shear Strength 1 except that polycarbonate plates (PC plates) each having a length of 100 mm, a width of 25 mm, and a thickness of 1 mm were used in place of aluminum plates each having a length of 100 mm, a width of 25 mm, and a thickness of 1 mm in Shear Strength 1.

### [Shore A hardness (Type A hardness), Shore D hardness (Type D hardness)]

The Shore A hardness and Shore D hardness of the cured products (thickness 2 mm) of the adhesive compositions prepared in the Examples and Comparative Examples were measured in accordance with JIS K6253. The cured products were produced by curing the adhesive compositions for 7 days in an environment having 23°C and 50% RH.

### [Viscosity]

Using a B-type viscometer (rotational viscometer manufactured by BROOKFIELD, DV-E), the viscosity (Pa·s) at 25°C immediately after preparation of the adhesive compositions was measured, with the rotational speed of a spindle (SC4-14) being set at 10 rpm.

### [Particle size]

The average particle size (µm) of a thermally conductive filler was determined as an average value by measuring the particle sizes of randomly selected 50 or more particles using a scanning electron microscope ("SU3500" manufactured by Hitachi High-Technologies Corporation).

### [Thermal conductivity]

The thermal conductivities of the cured products of the adhesive compositions prepared in the Examples and Comparative Examples were determined by a method that measures thermal resistance using a measuring apparatus in accordance with ASTM D5470-06.

Specifically, cured products having a thicknesses of 1.0 mm, 1.5 mm, or 2.0 mm were prepared, and the thermal resistance and the thickness when compressed at a pressure of 30 psi were measured. Regarding the thermal resistance values of these three cured products, a graph was created on which the horizontal axis indicates thicknesses and the vertical axis indicates thermal resistance values, and an approximate straight line for three points was determined by the least squares method. The inclination of the approximate straight line is regarded as thermal conductivity.

Thermal resistance was measured at 80°C using LW-9389 manufactured by Long Win Science and Technology Corporation.

### (Tack-free time)

The tack of the adhesive compositions prepared in the Examples and Comparative Examples was measured in accordance with a tack-free test as set forth in JIS A1439. Specifically, the adhesive compositions prepared in the Examples and Comparative Examples were applied to a polyethylene terephthalate (PET) film to have a thickness of 2 mm, then a tactile examination was performed at predetermined intervals in an environment having 23°C and 50% RH, and the time needed for the composition to loose its tackiness to the fingertips was recorded.

### (Depth of cured part)

Cylindrical polyethylene containers each having a depth of 10 mm and a diameter of 20 mm were filled with the adhesive compositions prepared in the Examples and Comparative Examples, and then the surfaces of the adhesive compositions were flattened with a spatula. Next, the adhesive compositions were left to stand for 24 hours in an environment having 23°C and 50% RH. Thereafter, only the part where the adhesive composition had cured was removed from the top of the polyethylene container, the uncured adhesive composition adhering to the back side was lightly scraped off with a spatula, then the thickness (mm) thereof was measured using a film thickness gauge (manufactured by Mitutoyo Corporation, product name: "Digimatic Indicator 543-125").

### [Observation of state of peeling]

The test pieces after measuring Shear Strength 1 and Shear Strength 2 described above were observed to determine whether the adhesive layer had interfacial peeling from the adherends (an aluminum plate and a polycarbonate plate) or whether the adhesive layer had cohesive failure.

In the case of interfacial peeling, no adhesive residue remains on the adherend surface, meaning good reworkability.

### <Organic polymer feedstocks>

- Hydrolyzable silyl group-containing polyalkylene oxide, manufactured by Kaneka Corporation, trade name "MS Polymer S-303", number-average molecular weight 38,000
- Base material of addition reaction type silicone, contains alkenyl group-containing organopolysiloxane and very small amount of addition reaction catalyst (platinum catalyst)
- Curing agent of addition reaction type silicone, contains alkenyl group-containing organopolysiloxane and hydrogen organopolysiloxane
- Isocyanate group-containing urethane polymer, "Rubilon" manufactured by Toyo Polymer Co., Ltd.

### <Thermally conductive fillers>

- Aluminum hydroxide 1 (no surface treatment, irregularly shaped, average particle size 50 µm)
- Aluminum hydroxide 2 (no surface treatment, irregularly shaped, average particle size 10 µm)
- Aluminum hydroxide 3 (no surface treatment, irregularly shaped, average particle size 1 µm)
- Aluminum hydroxide 4 (surface treatment with silane coupling agent, irregularly shaped, average particle size 1 µm)
- Aluminum oxide 1 (no surface treatment, spherical, average particle size 50 µm)
- Aluminum oxide 2 (no surface treatment, spherical, average particle size 1 µm)

### <Fillers other than thermally conductive fillers>

- Colloidal calcium carbonate manufactured by Shiraishi Calcium Kaisha Ltd., trade name "CCR", average particle size of primary particles: 0.08 µm)

### <Plasticizer>

Polypropylene glycol (polypropylene oxide), number-average molecular weight 3,000

### <Additives>

Silanol condensation catalyst: Dioctyltin oxide
Water
Dehydrating agent: Vinyltrimethoxysilane
Aminosilane coupling agent: N-(2-Aminoethyl)-3-aminopropyltrimethoxysilane
Silane coupling agent: 7-Octenyltrimethoxysilane

### [Example 1]

A first agent was prepared by mixing hydrolyzable silyl group-containing polyalkylene oxide, aluminum hydroxide 1, aluminum hydroxide 2, aluminum hydroxide 4, a dehydrating agent, and an aminosilane coupling agent according to the formulation set forth in Table 1. A second agent was prepared by mixing aluminum hydroxide 1, aluminum hydroxide 2, aluminum hydroxide 4, a plasticizer, a silanol condensation catalyst, and water according to the formulation set forth in Table 1. Then, the first agent and the second agent were mixed to prepare a curable adhesive composition for a battery. Various measurements were carried out immediately after preparing the adhesive composition.

### [Examples 2, 6 and 7, Comparative Examples 3 to 4]

Adhesive compositions were prepared in the same manner as Example 1 except that the kinds and the amounts of the components were changed according to Table 1. Various measurements were carried out immediately after preparing the adhesive compositions.

### [Examples 3 to 5, Comparative Examples 1 to 2]

The components were mixed according to the formulations set forth in Table 1 to prepare adhesive compositions. Various measurements were carried out immediately after preparing the adhesive compositions.

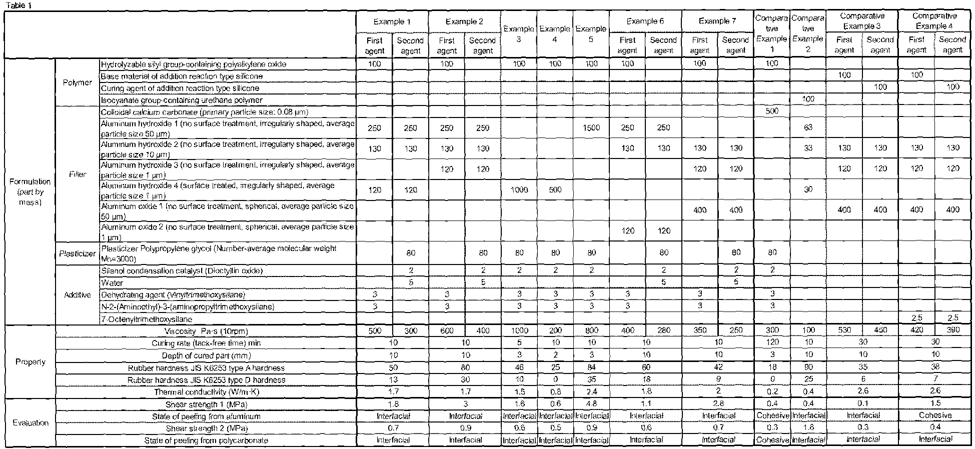

As is clear from the results of the above Examples, it was found that the cured products of the adhesive compositions of the present invention have shear strength within a specific range with respect to aluminum and polycarbonate and have suitable adhesive strength, and interfacial peeling occurs when peeling the cured products from adherends (components). Accordingly, the cured products have excellent reworkability. Moreover, the cured products have a specific level of or greater thermal conductivity, and thus have good heat dissipation properties.

On the other hand, the cured product of the adhesive composition of Comparative Example 1 had poor adhesion, cohesive failure occurred when peeling the cured product from adherends (components), and thus the cured product had poor reworkability.

The adhesive compositions of Comparative Examples 2 to 4 do not contain a hydrolyzable silyl group-containing organic polymer, the cured products thereof had poor adhesion to either adherend, or cohesive failure occurred when the cured products were peeled from adherends (components), and thus the cured products had poor reworkability.

### Reference Signs List

- 10: Battery module
- 11: Case
- 12: Cell
- 12a: Positive electrode
- 12b: Negative electrode
- 12c: Flat surface
- 12d: End
- 13: Adhesive layer
- 14: Battery pack housing
- 20: Battery pack

## Claims

1. A curable adhesive composition for a battery, comprising a hydrolyzable silyl group-containing organic polymer and a thermally conductive filler,
a cured product of the curable adhesive composition for a battery having a Shore A hardness of 90 or less and a shear strength of 0.5 to 5 MPa.

2. A curable adhesive composition for a battery, which is used by mixing a first agent comprising a hydrolyzable silyl group-containing organic polymer and a thermally conductive filler, and a second agent comprising a silanol condensation catalyst,
the curable adhesive composition for a battery after being cured having a Shore A hardness of 90 or less and a shear strength of 0.5 to 5 MPa.

3. A curable adhesive composition for a battery, comprising a first agent comprising a hydrolyzable silyl group-containing organic polymer and a thermally conductive filler and filled in a first container,
and a second agent comprising a silanol condensation catalyst and filled in a second container,
a cured product of the curable adhesive composition for a battery having a Shore A hardness of 90 or less and a shear strength of 0.5 to 5 MPa.

4. The curable adhesive composition for a battery according to any one of claims 1 to 3, wherein the hydrolyzable silyl group-containing organic polymer is hydrolyzable silyl group-containing polyalkylene oxide.

5. The curable adhesive composition for a battery according to any one of claims 1 to 4, wherein the hydrolyzable silyl group-containing organic polymer has a number-average molecular weight (Mn) of 8,000 to 50,000.

6. The curable adhesive composition for a battery according to any one of claims 1 to 5, wherein the thermally conductive filler is at least one selected from the group consisting of metal oxide, metal hydroxide, metal nitride, and metal carbide.

7. The curable adhesive composition for a battery according to any one of claims 1 to 6, wherein the thermally conductive filler comprises aluminum hydroxide that is not surface-treated.

8. The curable adhesive composition for a battery according to any one of claims 1 to 7, having a viscosity (25°C, rotational speed 10 rpm) of 100 to 1000 Pa·s.

9. The curable adhesive composition for a battery according to claim 2, wherein the first agent has a viscosity η 1 (25°C, rotational speed 10 rpm) of 100 to 1000 Pa·s, the second agent has a viscosity η2 (25°C, rotational speed 10 rpm) of 100 to 1000 Pa·s, and an absolute value of difference between the viscosity η 1 and the viscosity η2 is 300 Pa·s or less.

10. The curable adhesive composition for a battery according to any one of claims 1 to 9, further comprising a plasticizer.

11. The curable adhesive composition for a battery according to claim 10, wherein the plasticizer is at least one selected from the group consisting of a (meth)acrylate polymer having no hydrolyzable silyl group and a polyalkylene oxide having no hydrolyzable silyl group.

12. A battery module comprising a case and a plurality of cells disposed in the case, wherein an adhesive layer is disposed in at least one of between the case and a cell and between the plurality of cells,
the adhesive layer is a cured product of a curable adhesive composition for a battery comprising a hydrolyzable silyl group-containing organic polymer and a thermally conductive filler, and the cured product has a Shore A hardness of 90 or less and a shear strength of 0.5 to 5 MPa.

13. A battery pack comprising a battery pack housing and a plurality of battery modules disposed in the battery pack housing, wherein an adhesive layer is disposed in at least one of between the battery pack housing and a battery module and between the plurality of battery modules,
the adhesive layer is a cured product of a curable adhesive composition for a battery comprising a hydrolyzable silyl group-containing organic polymer and a thermally conductive filler, and the cured product has a Shore A hardness of 90 or less and a shear strength of 0.5 to 5 MPa.
